# FASCICULE DE BREVET EUROPEEN

(11) **EP 0 469 267 B1**
(45) Date de publication et mention de la délivrance du brevet: **10.08.1994**
(21) Numéro de dépôt: 91109424.1
(22) Date de dépôt: 08.06.1991
(51) Int. Cl.: G01B 7/10

(54) **Procédé et capteur pour la mesure en continu de l'épaisseur d'un revêtement**
Verfahren und Vorrichtung zur kontinuierlichen Messung der Dicke einer Beschichtung
Method and device for continuous thickness measurement of a coating

(30) Priorité: 20.06.1990 LU 87751
(43) Date de publication de la demande: 05.02.1992
(73) Titulaire: ARBED S.A., L-2930 Luxembourg (LU)
(72) Inventeur: Schoos, Aloyse, L-4831 Rodange (LU)
(74) Mandataire: Freylinger, Ernest T.

(56) Documents cités:
- EP-A- 0 179 720
- AU-B- 87 000
- FR-A- 2 531 527
- US-A- 3 679 968
- US-A- 3 815 017

## Description

La présente invention a pour objet un procédé qui permet de déterminer sans contact et de façon non destructive l'importance par unité de surface de la charge d'un produit de revêtement déposé sur un substrat métallique de composition différente de celle du revêtement, ainsi qu'un capteur capable de fournir une indication précise sur l'épaisseur prémentionnée d'un tel revêtement, cette détermination étant exécutée directement et en continu sur le produit au fur et à mesure de son traitement, de sorte à rendre possible une intervention de régulation immédiate sur le processus de revêtement en cours et de pouvoir garantir ainsi tout aussi bien l'épaisseur spécifiée du revêtement que l'uniformité de son dépôt sur toute la longueur du produit traité.

Comme la qualité du revêtement et la constance de cette qualité sont deux critères essentiels d'appréciation de produits revêtus, on comprend aisément que seul un procédé de contrôle industriel qui travaille directement sur le flux et au rythme de la production et qui fournit une réponse très rapide, puisse donner satisfaction. Ceci n'est que plus vrai s'il s'agit en plus, comme presque de règle générale de nos jours, de greffer une régulation automatique sur ce contrôle. Ces exigences valent plus ou moins de la même façon pour les différents principes et procédés de revêtement, soit chimiques, soit électrolytiques, soit au trempé. Aussi ne suffit-il plus de déterminer après la fin du traitement par des voies lentes, comme l'analyse chimique, le poids du revêtement sur quelques échantillons. D'un autre côté, certains des procédés connus de mesure directe et continue, qui donnent des résultats valables sous des conditions bien déterminées dans d'autres domaines, ne conviennent pas ici. Ceci est surtout le cas pour les mesures par les voies optiques et pour les procédés radioactifs.

La mesure par voie électromagnétique a également déjà été préconisée pour déterminer directement et en continu l'épaisseur d'un revêtement déposé sur un substrat ferromagnétique. Ainsi, on a déjà proposé de mesurer la variation de la phase ou celle de l'amplitude de la tension induite dans une bobine qui ne fait pas directement partie du générateur de fréquence. D'un autre côté il a aussi été suggéré d'utiliser la bobine du circuit résonnant d'un oscillateur directement pour entrer en contact électromagnétique avec le produit à inspecter.

Dans ces deux catégories d'approches de la mesure de l'épaisseur d'un revêtement on peut ranger respectivement la demande de brevet européen no 179720 et le brevet australien no 582340.

Le premier des textes prénommés concerne un système qui est spécifiquement conçu et appliqué pour mesurer l'importance de couches métalliques sur un support conducteur de forme plate. Le système est basé sur la détermination des pertes correspondant à l'effet Joule, dû aux courants de Foucault, qui apparaissent lorsqu'on approche un circuit magnétique excité par une tension alternative de la surface métallique à analyser. Il y a toutefois que le traitement des signaux décrit, comprenant une mesure exacte des phases, n'est pas sans poser des problèmes. Un autre inconvénient majeur réside dans le fait qu'il faut absolument compenser les variations de distance entre le capteur et la surface du produit.

Le deuxième des textes cités décrit la mesure de l'impédance d'une bobine de mesure sans noyau qui est en contact électromagnétique avec le produit et il se base sur les variations de l'impédance pour déterminer ou faire varier l'epaisseur d'un revêtement. Or la mesure de l'impédance de la bobine se fait par l'intermédiaire de la mesure de l'amplitude ou de la phase, le capteur travaillant à une fréquence de l'ordre de 500 KHz pour des produits galvanisés. Ce procédé de mesure souffre d'un manque de sensibilité inhérente pour ce qui est de la saisie de l'épaisseur d'un revêtement, ce qui nécessite de nombreux artifices supplémentaires pour la stabilisation.

Le but de la présente invention est d'éviter les inconvénients des systèmes connus et de proposer un procédé permettant de mesurer, sans problèmes et sans artifices, automatiquement et en continu, l'épaisseur d'un revêtement déposé sur un substrat métallique, ou autrement dit, de mesurer la quantité de produit de revêtement déposé ou chargé par unité de surface sur un substrat.

Ce but est atteint par un procédé, dans lequel on produit un champ magnétique alternatif à fréquence élevée et on fait défiler le substrat muni de son revêtement à travers ce champ magnétique, qui présente les caractéristiques de la première revendication.

Il sera apprécié que la présente invention propose aussi des dispositifs préférentiels pour la mise en oeuvre du procédé proposé.

Comme donc l'épaisseur d'un revêtement peut ainsi être mesurée directement ou de façon univoque, l'invention ouvre aussi la possibilité d'intervenir pour ainsi dire instantanément sur la régulation du processus de revêtement, de sorte que l'on peut maintenir pour l'épaisseur du revêtement en permanence une fourchette assez étroite par rapport aux tolérances spécifiées. Avec les procédés classiques actuels de revêtement de fils au trempé par exemple, on vise en général une charge de 10% supérieure à celle demandée, afin de pouvoir éviter de tomber en dessous du minimum à garantir. Ainsi, grâce à la présente invention, on ne peut pas seulement réaliser un revêtement plus uniforme et plus conforme à l'épaisseur visée, mais on économise aussi de la matière première.

Pour atteindre ce but suivant la présente invention on se base également sur la mesure en continu des pertes par effet Joule des courants de Foucault induits dans le produit revêtu par un champ magnétique alternatif. Le fait est que pour une fréquence préétablie donnée, ces pertes sont inversément proportionnelles à l'épaisseur du revêtement. Comme les pertes propres à une bobine d'induction bien dimensionnée sont faibles et constantes, alors que les pertes causées par le produit revêtu, c'est-à-dire le substrat avec son revêtement passant dans la bobine, sont bien supérieures et variables, on obtient une mesure directe significative, qui en plus est monotone. Il est entendu que le produit soumis à la mesure à la sortie de son bain de revêtement à chaud ou à froid est un substrat ferromagnétique et que le revêtement est un métal conducteur d'électricité ayant une faible perméabilité magnétique inférieure à celle du substrat revêtu.

Suivant la caractéristique de l'invention on choisit d'un côté la fréquence d'excitation de sorte que la pénétration naturelle des courants de Foucault dans le matériel du revêtement est assez proche de l'épaisseur visée du revêtement à appliquer, ce dernier variant le plus souvent entre quelques microns et une centaine de microns au plus, alors que de l'autre côté les fréquences optimales pour effectuer la mesure varient en fonction de la conductibilité du métal de revêtement par rapport à celle du substrat entre 1 MHZ et environ 100 MHZ comme valeur supérieure. Ces fréquences sont donc très nettement plus élevées - en gros d'un facteur de 10 à 100 - que les fréquences de l'ordre de grandeur de 100 KHZ, telles qu'elles sont utilisées si on a recours à la mesure de l'effet de phase ou de l'amplitude de la force électromotrice suivant l'état de la technique. Les gammes de fréquences utilisées ici sont par exemple celles de 1-10 MHZ pour la combinaison zinc sur acier, alors que la mesure de très fines couches de laiton de l'ordre de 1 µm sur du fil d'acier très mince est effectuée dans la gamme des 100 MHZ. Aussi la présente méthode de mesure de la puissance dissipée dans des gammes de fréquences élevées présente-t-elle des avantages bien particuliers, comme le fait que la part relative des pertes dues au substrat est diminuée ou que la mesure peut aussi être effectuée en continu sur un produit en défilement très rapide.

Ce procédé suivant l'invention réduit donc la mesure de l'épaisseur d'un revêtement à la mesure d'une puissance consommée respectivement à la mesure du facteur de qualité d'une bobine.

Aussi un capteur de mesure conforme à la présente invention se caractérise-t-il par le fait qu'il consiste en un oscillateur composé d'un circuit LC ( bobine-condensateur ) et d'un amplificateur à gain variable branché en boucle fermée. Une boucle de régulation limite l'amplitude des oscillations.

En considérant qu'un circuit résonnant LC constitue un système dont le gain est fonction des pertes de la bobine, les instruments peuvent être très simples et ils font une mesure quasi directe des pertes de la bobine, y compris donc les pertes causées par la présence du produit revêtu. Les pertes propres d'une bobine bien dimensionnée étant très réduites, les pertes causées résultent en premier lieu du produit revêtu traversant le champ de la bobine, les variations des pertes étant imputables quasi exclusivement au revêtement.

D'un autre côté, sachant qu'à une amplitude d'oscillations constante le produit des gains de l'amplificateur et du circuit LC est 1 et connaissant les caractéristiques de l'amplificateur, on peut déduire le gain du circuit LC de la tension de régulation. Ce gain du circuit LC est, comme montré ci-devant, en relation directe avec les pertes, donc en relation bien définie avec l'épaisseur de la couche du revêtement sur le produit.

La régulation de l'amplitude permet de travailler toujours dans des conditions de mesure pratiquement identiques et indépendantes des dimensions et de la nature du produit à être soumis au contrôle. Ainsi l'oscillateur avec l'amplificateur à gain variable et la boucle de régulation de l'amplitude permettent-ils d'utiliser le même capteur, sans modification du réglage, pour une vaste gamme de sections du produit de même que pour différentes épaisseurs nominales du revêtement.

D'autres approches pour mesurer les pertes d'une bobine sont possibles. Ainsi une autre façon de mesurer ces pertes d'une bobine peut consister en une mesure de la tension, du courant et du déphasage. Toutefois cette approche est en général coûteuse et la mesure de phase devient difficile si on approche des 90°. D'un autre côté la bande passsante d'un circuit LC est fonction du facteur de qualité de la bobine et en conséquence des pertes de la bobine. La mesure suffisamment exacte de cette bande passante nécessite un circuit intelligent qui coûte relativement cher. Il vient s'y ajouter que ces deux dernières approches constituent des mesures indirectes des pertes, alors que la méthode de réalisation préférentielle décrite ci-devant consiste en une mesure électrique plus directe de la puissance dissipée. Par ailleurs les capteurs décrits plus haut sont de loin meilleur marché, ce qui rend possible leur utilisation dans des installations comprenant très souvent plusieurs centaines de lignes individuelles de galvanisation.

Le signal obtenu d'après la méthode et avec les moyens de la présente invention peut être directement affiché et/ou enregistré avec conversion simultanée dans une unité caractérisant l'épaisseur du revêtement. Le signal peut aussi être traité et utilisé pour la régulation des opérations nécessaires à l'application du revêtement.

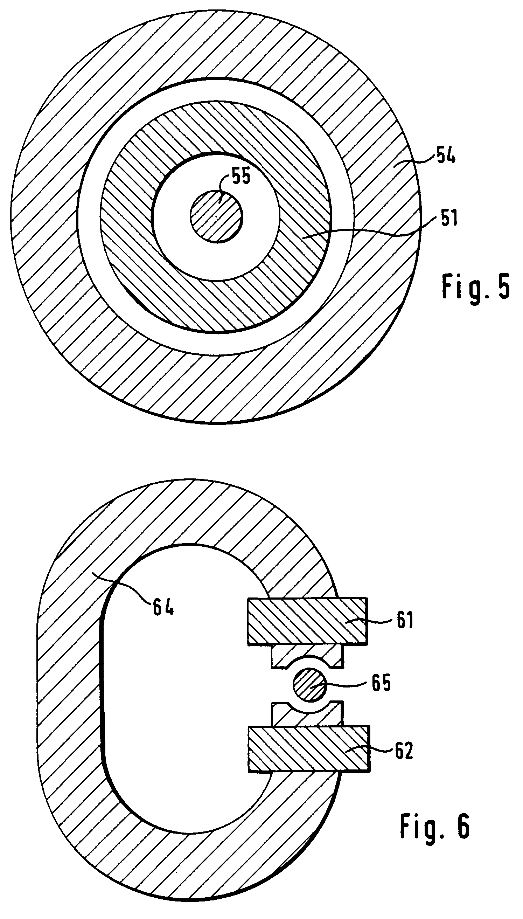

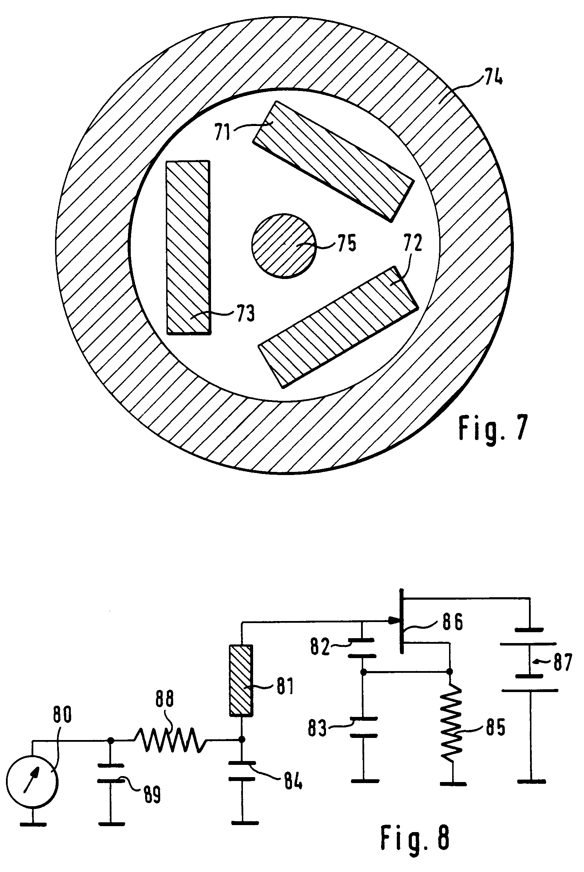

Pour les besoins de la présente invention on peut utiliser différents types de configurations pour les bobines qui sont en contact électromagnétique avec le produit revêtu en défilement. Dans les configurations à une bobine ( voir fig. 5 ) le chemin de défilement du produit à examiner se couvre avec l'axe de la bobine et le champ magnétique est coaxial au produit; dans celles à deux bobines ( voir fig. 6 ) qui sont disposées de part et d'autre de l'entrefer d'un aimant en forme de C et qui sont branchées en série, les champs alternatifs sont orthogonaux par rapport à l'axe de défilement du produit qui passe entre les deux pôles; dans celles à trois bobines disposées en triangle dans un même plan ( voir fig. 7 ), un champ orthogonal à l'axe du produit défilant verticalement tourne autour des axes communs de défilement du produit et de disposition des bobines . Ainsi on peut choisir différentes configurations en fonction tant des propriétés du revêtement que de la géométrie du produit en défilement. Dans tous les cas, le choix de matériaux ferromagnétiques appropriés aux fréquences choisies pour être utilisables comme guide des champs magnétiques et comme blindage externe, permet de réduire la puissance dissipée dans les bobines elles-mêmes, de concentrer l'effet sur le produit examiné et de minimiser le couplage capacitif entre la bobine et le produit.

Bien qu'on n'écarte pas à priori des applications sur des produits de forme généralement quelconque, le procédé suivant l'invention est toutefois utilisé en premier lieu pour le contrôle continu, sans contact et non destructif du revêtement sur des produits allongés, par exemple du fil, des barres rondes ou polygonales et des tubes.

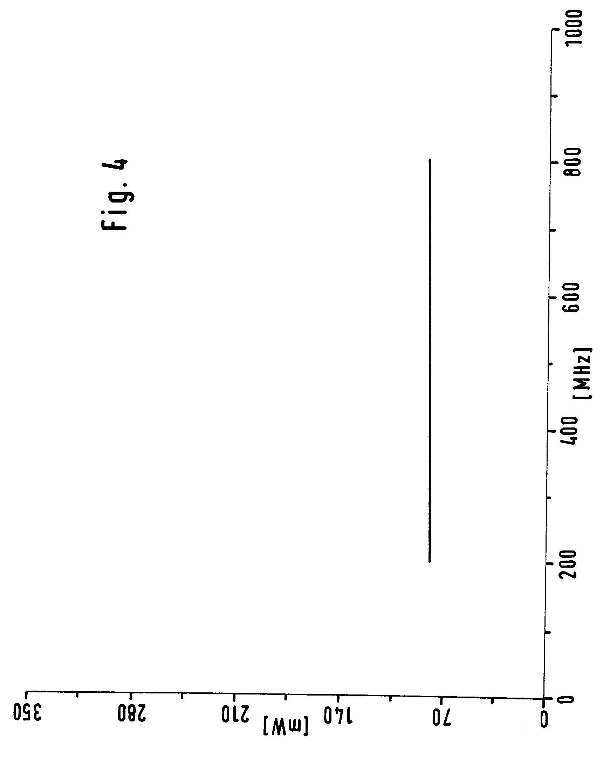

L'invention telle qu'elle peut être mise en exploitation est décrite plus en détail ci-après en se référant aux différents dessins dans lesquels les diverses figures représentent ce qui suit:

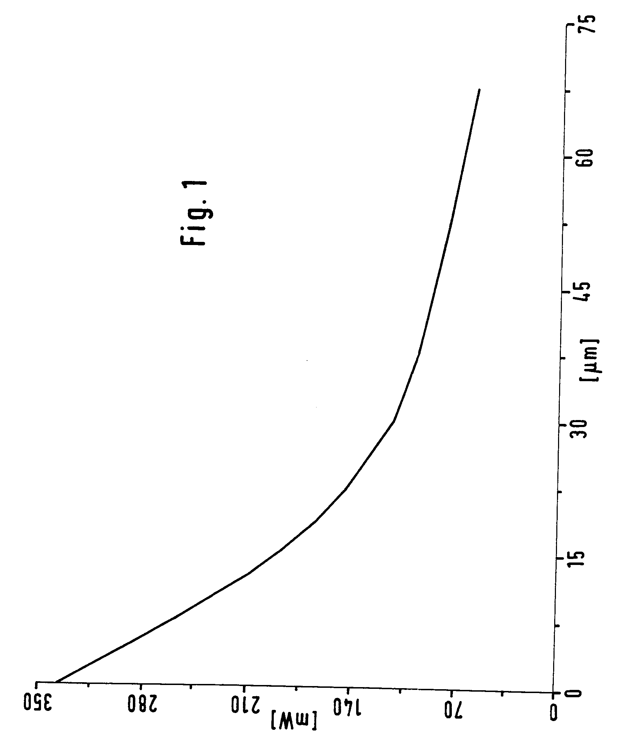

- figure 1 montre un exemple relatif à la dépendance des valeurs de la perte de puissance des courants de Foucault induits en fonction de l'épaisseur de la couche du métal de revêtement; les pertes par effet Joule sont portées en ordonnée en mW (milliwatt) et les épaisseurs de la couche de zinc en µm (microns) en abscisse,

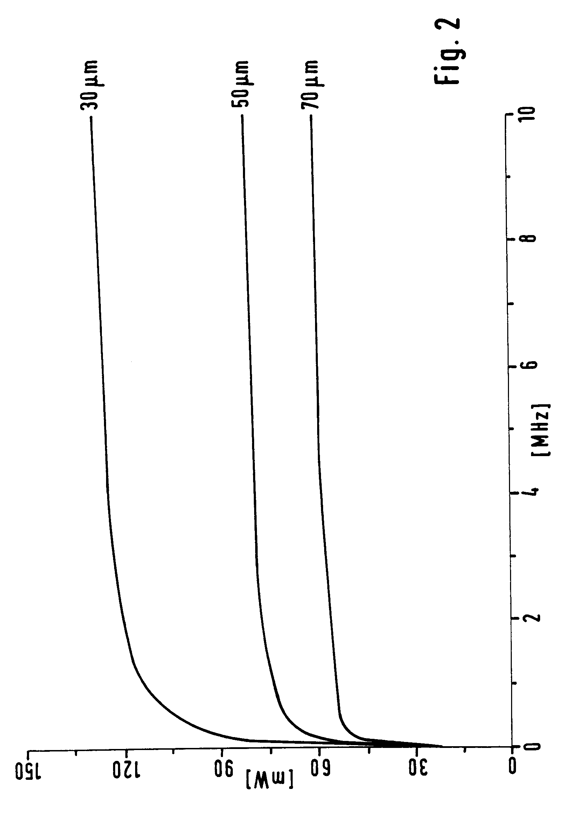

- figure 2 illustre l'étendue de l'indépendance de la valeur de la perte de puissance pour 3 épaisseurs données du revêtement zinc sur acier dans la gamme inférieure des fréquences de mesure préconisées; les pertes par effet Joule sont en ordonnée et en abscisse on trouve les fréquences d'excitation,

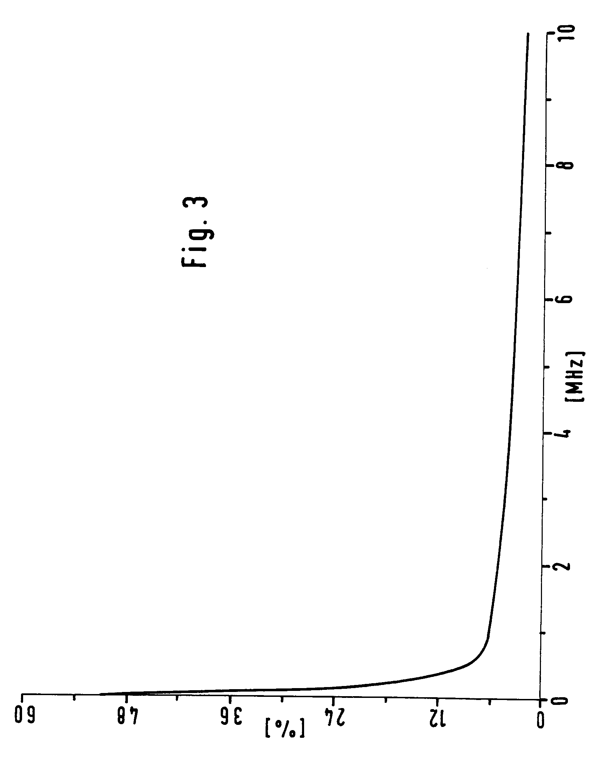

- figure 3 montre qu'au delà d'une fréquence minimale (en abscisse) la part relative de la puissance dissipée (en ordonnée) par le substrat lui-même devient faible et la puissance dissipée totale devient presque indépendante des caractéristiques exactes du substrat,
- corrélativement à la figure 3 la figure 4 illustre par la droite parallèle à l'abscisse que les résultats de mesure ne sont pas influencés significativement par les propriétés électromagnétiques du substrat dans la gamme des fréquences de mesure choisies suivant l'invention, c'est-à-dire qu'il y a proportionnalité entre le signal et l'épaisseur à mesurer; la puissance est portée en ordonnée et la perméabilité relative magnétique du substrat en abscisse,
- figure 5 est une coupe orthogonale à l'axe du produit en défilement à travers une première forme d'exécution d'une bobine d'induction suivant l'invention,
- figure 6 est une coupe orthogonale à l'axe du produit en défilement à travers une autre forme d'exécution d'une bobine d'induction suivant l'invention,
- figure 7 est une coupe orthogonale à l'axe du produit en défilement à travers une troisième forme d'exécution d'un ensemble de bobines d'induction suivant l'invention,
- figure 8 montre, en forme de schéma, une des configurations possibles pour la mesure de l'épaisseur d'un revêtement suivant la présente invention,
- figure 9 représente un autre exemple d'un circuit de mesure répondant aux exigences suivant l'invention.

Comme illustré par la figure 1 il existe une relation de proportionnalité inverse entre d'un côté les pertes de puissance (en mW) par effet Joule des courants de Foucault induits dans un champ magnétique alternatif et d'un autre côté l'importance de la couche du produit de revêtement métallique déposé sur un substrat ferromagnétique qu'on laisse défiler à l'état revêtu dans ledit champ magnétique. Par étalonnage ou conversion appropriés, la valeur de la mesure de la puissance dissipée peut apparaître ou être exprimée soit comme 'épaisseur de couche en microns (µm)', tel qu'illustré, soit comme quantité de produit de revêtement qui se trouve être déposée par unité de surface ou de longueur du substrat et qui est exprimée en 'milligrammes par cm^{2,} ou en 'milligrammes par cm'.

Pour des couples substrat-revêtement de natures différentes la relation mentionnée ci-devant est donnée pour des gammes de fréquences bien déterminées. En général la fréquence d'excitation est choisie de sorte que la pénétration naturelle des courants de Foucault dans le matériel du revêtement soit proche de l'épaisseur visée du revêtement. Ces fréquences se trouvent normalement dans la fourchette 1 à 100 MHZ pour les revêtements usuels. Dans la figure 2 est représenté le cas précis du revêtement de zinc appliqué par galvanisation au trempé sur un substrat d'acier. On voit qu'au delà d'une fréquence minimale, qui selon l'épaisseur du revêtement de zinc sur l'acier est de 1 à 2 MHZ, et jusqu'à une fréquence de 10 MHZ et plus, la puissance dissipée dans un revêtement d'une épaisseur donnée de 30, 50 ou 70 microns ne varie pratiquement pas.

Si on a recours aux fréquences élévées, tel que préconisé par la présente invention, la part relative des pertes dans le substrat se trouve diminuée. Ainsi donc la réponse électromagnétique visée ici n'est-elle pratiquement plus influencée par le substrat. La figure 4 montre que la valeur de la perte de puissance ( 71 mW ) reste constante pour la fréquence de mesure de 1 MHZ ( pour une épaisseur de revêtement de 50 µm de zinc ) alors que les perméabilités magnétiques relatives du substrat peuvent être très différentes. Par ailleurs, comme il ressort de la figure 3, la part de la puissance dissipée par effet Joule dans un substrat à caractéristiques électromagnétiques variables reste quand-même insignifiante, c'est-à-dire comprise entre seulement 3% et 6%.

La plupart des méthodes connues basées sur les courants de Foucault profitent des variations de l'impédance d'une bobine en fonction de l'épaisseur du revêtement. Ces variations sont généralement mesurées par l'intermédiaire de la phase et de l'amplitude et elles sont de l'ordre de 1% à 10 % . Ceci a entrainé l'utilisation de ponts de mesure et de montages différentiels pour extraire les faibles variations des signaux. D'un autre côté la puissance dissipée varie normalement de plus de 100 % par rapport à la valeur minimale dans une gamme typique d'épaisseurs de revêtement.

Il apparaît donc ici que le paramètre de mesure choisi ici permet aux fréquences élevées définies de mesurer l'épaisseur de n'importe quel revêtement électroconducteur appliqué sur un substrat ferromagnétique, ceci d'une façon continue et pour des vitesses de défilement très élevées de l'ordre de grandeur d'une centaine de mètres à la seconde.

Pour exploiter la relation fondamentale entre la puissance dissipée et l'épaisseur de la couche du revêtement, il est important d'éviter les pertes par rayonnement et les pertes causées par les courants de Foucault dans des matériaux conducteurs autres que le produit soumis au contrôle. Puisque le blindage métallique ne convient pas, on doit utiliser des matériaux ferromagnétiques à très faible conductivité, ferrites pour hautes fréquences ou verres ferromagnétiques, pour concentrer les pertes dans le produit à contrôler.

La figure 5 montre une configuration qui produit un champ magnétique coaxial par rapport à l'axe du produit 55 en défilement. Ce produit 55, dont l'épaisseur du revêtement est à déterminer, est entouré d'une bobine solénoidale 51 qui se trouve dans une enceinte en ferrit 54 comme blindage externe. Cette configuration convient bien si le revêtement est assez régulier, comme c'est le cas pour les dépôts effectués par voie chimique ou électrolytique.

La figure 6 a pour objet une configuration qui produit un champ orthogonal par rapport à l'axe de défilement du produit 65. Ce produit 65 à mesurer défile dans l'entrefer d'un aimant en forme de C constitué par un ferrit 64 et deux bobines 61 et 62 branchées en série. On peut assurer un contrôle encore plus complet en branchant avant ou après l'ensemble principal tel que décrit et illustré, au moins encore un autre système identique, qui se trouve lui aussi sur l'axe virtuel du produit, mais est décalé le long de cet l'axe et est tourné de 90° par rapport à celui-là. Ces configurations conviennent surtout si les revêtements sont assez inhomogènes, ce qui est le cas plus pour les revêtements produits par trempage à chaud que pour ceux obtenus par voie chimique ou électrolytique. En effet ces systèmes mesurent le long de chaque fois 2 côtés opposés du produit en défilement, c'est- à-dire le long de nx2 faces, où n est le nombre de systèmes de mesure.

Suivant la figure 7 on produit un champ rotatif perpendiculaire à l'axe de défilement du produit 75. Ce produit se trouve entouré de trois bobines 71, 72 et 73 qui sont décalées de 120° les unes par rapport aux autres et qui sont alimentées par des tensions déphasées de 120°. L'ensemble comprend par ailleurs l'enceinte périphérique en ferrit 74. Ce système permet d'effectuer un contrôle complet d'un revêtement irrégulier à un endroit donné et sur toute sa périphérie, c'est-à-dire indépendamment de la position angulaire du produit. Alternativement les trois bobines 71, 72 et 73 peuvent comprendre des noyaux de ferrit avec des pôles profilés.

La bobine cylindrique de la figure 5 avec son champ magnétique coaxial à l'axe de défilement du produit est peu sensible aux mouvements transversaux du produit. Toutefois pour des capteurs classiques à champ orthogonal à l'axe de défilement du produit, le résultat de mesure dépend fortement de la distance exacte entre le capteur et la surface du produit. Ce problème est résolu ici par l'utilisation de matériaux ferromagnétiques de forme spécifique pourque le produit défile dans l'entrefer et se trouve toujours dans un champ quasi uni forme. L'optimisation de la forme des pôles permet d'obtenir encore des résultats de mesure corrects lorsque le produit se déplace dans un rayon qui peut être un multiple de celui du produit.

Un circuit électronique très simple, qui permet d'afficher directement une valeur proportionnelle à la charge par unité de surface du revêtement, c'est-à-dire à l'épaisseur du revêtement, est représenté par la figure 8. La base de ce circuit est un oscillateur dont la bobine (81) du circuit LC est en contact électromagnétique avec le produit revêtu. Cette bobine (81) peut avoir la configuration de bobine unique circulaire suivant la figure 5; elle peut aussi être constituée par les deux bobines en série représentées à la figure 6. La bobine (81) ensemble avec les condensateurs (82) et (83) déterminent la fréquence d'oscillation, tandis que le condensateur (84) a une capacité élevée par rapport aux condensateurs (82) et (83). La résistance (85) relie la source du transistor à effet de champ (86) à la masse tandis que le drain est connecté à l'alimentation en tension continue (87). La résistance (88) et le condensateur (89) forment un filtre passe bas de sorte que l'affichage (80) n'est pas exposé à la haute fréquence.

Le fonctionnement de ce circuit est basé sur la régulation de l'amplitude des oscillations. Le transistor à effet de champ est un amplificateur à gain variable en fonction de la tension moyenne appliquée au gate. La diode du gate du transistor joue le rôle d'un redresseur et produit une tension aux bornes du condensateur 84 qui est d'autant plus négative que l'amplitude des oscillations est forte. Le transistor est choisi de sorte que cette tension est toujours négative par rapport à la masse et la valeur absolue de cette tension est directement proportionnelle à l'épaisseur du revêtement.

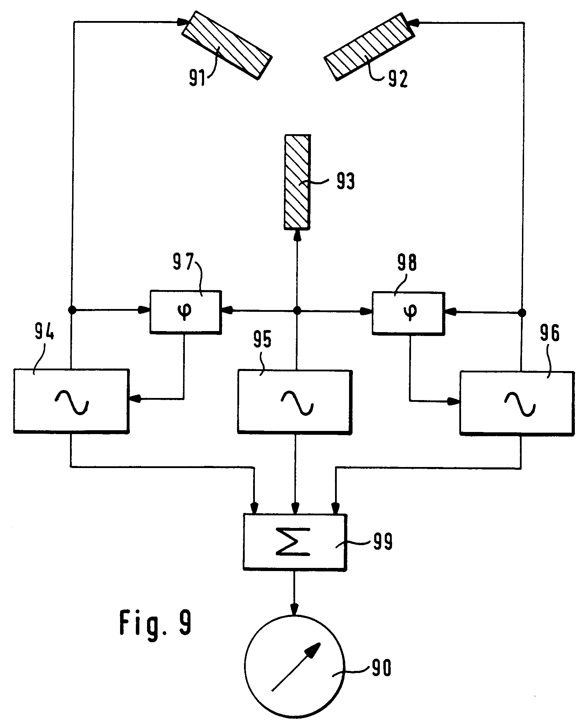

La figure 9 montre le schéma de principe de l'électronique correspondant aux bobines de la figure 7. Les bobines (91),(92) et (93) sont alimentées par trois oscillateurs (94),(95) et (96) pareils à celui de la figure 8. Les oscillateurs (94) et (96) sont munis de capacités variables qui permettent de varier la fréquence respectivement la phase à l'aide d'une tension appliquée (VCO). Cette tension est fournie par les circuits de comparaison de phases (97) et (98) qui assurent une régulation (PLL) du déphasage relatif de -120° pour l'oscillateur (94) et de + 120° pour l'oscillateur (96) par rapport à l'oscillateur (95). La valeur absolue du déphasage n'est pas critique. Ainsi l'ensemble des bobines (91), (92) et (93) produit un champ rotatif. Les tensions issues de la régulation de l'amplitude des oscillations des trois oscillateurs sont additionnées (99) pour produire une tension qui est proportionnelle à la charge globale du revêtement. Cette tension peut être affichée et/ou enregistrée directement (90). Elle peut par contre aussi alimenter une entrée analogique d'un ordinateur qui assure la surveillance et la régulation du processus de traitement du produit.

Comme l'importance quantitative du dépôt du produit de revêtement est mesurée on line, cette mesure permet d'un côté d'intervenir sans décalage important dans le temps sur les instruments qui règlent les paramètres importants du processus de traitement, comme la température du bain, la vitesse de défilement du substrat, l'intensité de refroidissement de la couche déposée, etc. D'un autre côté on peut en plus établir pour le client, soit des relevés avec tout ou partie des profils de revêtements, soit des certificats attestant le respect des tolérances imposées.

## Revendications

1. Procédé pour mesurer sans contact l'épaisseur réelle d'un revêtement électriquement conducteur déposé avec une épaisseur nominale sur un substrat ferromagnétique allongé, dans lequel on produit un champ magnétique alternatif à fréquence élevée et on fait défiler le substrat muni de son revêtement à travers ce champ magnétique, **caractérisé**
en ce que la fréquence du champ magnétique alternatif est choisie, en fonction de la conductibilité électrique dudit revêtement et dudit substrat, de façon que la profondeur de pénétration des courants de Foucault créés par le champ magnétique alternatif soit proche de l'épaisseur nominale dudit revêtement, et
en ce que l'on mesure la puissance dissipée lorsque ledit substrat muni de son revêtement défile à travers ledit champ magnétique et l'on déduit l'épaisseur réelle dudit revêtement en utilisant une relation directe et monotone existant entre la puissance dissipée et l'épaisseur réelle du revêtement.

2. Procédé selon la revendication 1, caractérisé en ce que ledit champ magnétique est un champ magnétique uniforme qui est sensiblement orthogonal à la direction de défilement du substrat muni de son revêtement.

3. Procédé selon la revendication 1 ou 2, caractérisé
par l'alimentation d'au moins une bobine avec un courant électrique alternatif à ladite fréquence choisie, de façon à produire un flux magnétique canalisé et concentré dans un circuit magnétique, ce dernier étant formé d'une matière ferromagnétique de façon à éviter des pertes à l'extérieur de ce circuit magnétique, et
par le défilement du substrat muni de son revêtement à travers le champ magnétique dans un entrefer dudit circuit magnétique.

4. Procédé selon l'une quelconque des revendication 1 à 3, caractérisé
en ce que l'on produit deux champs magnétiques uniformes qui sont sensiblement orthogonaux à la direction de défilement du substrat muni de son revêtement, les deux champs faisant entre eux un angle différent de zéro, et
en ce que l'on fait défiler ledit substrat muni de son revêtement à travers ces deux champs.

5. Procédé selon la revendication 1, caractérisé en ce que ledit champ magnétique est un champ magnétique tournant qui est sensiblement orthogonalal à la direction de défilement du substrat muni de son revêtement

6. Dispositif pour la mise en oeuvre du procédé selon la revendication 1 caractérisé par
au moins un circuit magnétique (64) en une matière ferromagnétique définissant un entrefer à pôles profilés pour le passage dudit substrat (65) muni de son revêtement,
un circuit oscillateur comprenant au moins une bobine (61, 62) pour induire dans ledit circuit magnétique (64) un flux magnétique à la fréquence requise par le procédé de la revendication 1, et
un circuit de mesure pour fournir un signal de sortie directement représentatif de la puissance dissipée.

7. Dispositif selon la revendication 6, caractérisé en ce que ledit circuit oscillateur comprend deux bobines (61, 62) qui sont situées de part et d'autre dudit entrefer et sont connectées en série.

8. Dispositif selon la revendication 6 ou 7, caractérisé en ce que ledit circuit oscillateur constitue un circuit LC (81, 82, 83) branché en boucle fermée avec un amplificateur à gain variable (86).

9. Dispositif selon la revendication 8, caractérisé par une boucle de régulation limitant l'amplitude des oscillations dans le circuit LC (81, 82, 83).

10. Dispositif pour la mise en oeuvre du procédé selon la revendication 5 caractérisé par
trois bobines (91, 92, 93) espacées de 120°, chacune de ces bobines étant associée à un circuit oscillateur (94, 95, 96) pour générer un champ magnétique à la fréquence requise par le procédé de la revendication 5,
un circuit de déphasage (97, 98) permettant de créer un déphasage de sensiblement 120° entre les champs magnétiques générés par les trois circuits oscillateurs (94, 95, 96), et
un circuit associé à chacune des trois bobines pour fournir un signal de sortie directement représentatif de la puissance dissipée au niveau de cette bobine.

11. Dispositif selon la revendication 10, caractérisé par un entrefer délimité par des pôles profilés en une matière ferromagnétique pour le passage dudit substrat muni de son revêtement.

## Claims

1. A method of measuring in a contactless manner the real thickness of aN electrically conductive coating deposited in a nominal thickness on an elongated ferromagnetic substrate, comprising the steps of generating a high frequency alternating magnetic field and of moving the coated elongated substrate with its coating through said magnetic field, **characterized**
in that the frequency of said alternating magnetic field is selected, as a function of the electric conductivity of said coating and said substrate material, so that the skin depth of the eddy currents generated by the alternating magnetic field is close to the nominal thickness of said coating, and
in that the dissipated power is measured when said elongated substrate with its coating passes through said alternating magnetic field, and the real coating thickness is obtained by using a direct and monotonous relation existing between the dissipated power and the real thickness of the coating.

2. Method as claimed in claim 1, characterized in that said magnetic field is a uniform magnetic field which is approximately orthogonal to the direction of displacement of said coated substrate.

3. Method as claimed in claim 2, characterized
by supplying an electric alternating current at said selected frequency to at least one coil , so as to generate a magnetic flux channelled and concentrated in a magnetic circuit, the latter consisting of a ferromagnetic material so as to avoid losses to the exterior of this magnetic circuit, and
by passing said substrate with its coating through said the magnetic field in an air gap of said magnetic circuit.

4. Method as claimed in any one of claims 1 to 3, characterized
in that two uniform magnetic fields are generated which are approximately orthogonal to the direction of displacement of the substrate with its coating, the two fields defining a non-zero angle relative to each other, and
in that said substrate with its coating is passed through these two magnetic fields.

5. Method as claimed in claim 1, characterized in that said magnetic field is a rotating magnetic field which is transverse to the direction of displacement of the substrate with its coating.

6. Device for carrying out the method as claimed in claim 1, characterized by
at least one magnetic circuit (64) of ferromagnetic material defining at least one air gap with profiled poles for passing said elongated substrate (65) with its coating,
an oscillator circuit comprising at least one coil (61, 62) to induce in said magnetic circuit (64) a magnetic flux at the frequency required for the method of claim 1,
a measuring circuit for providing an output signal that is directly responsive to dissipated power.

7. Device as claimed in claim 6, characterized in that said oscillator circuit comprises two coils (61, 62) that are located on either side of said air gap and are connected in series.

8. Device as claimed in claim 6 or 7, characterized in that said oscillator circuit constitutes a LC-circuit (81, 82, 83) connected in a closed loop with a variable-gain amplifier (86).

9. Device as claimed in claim 8, characterized by a control loop for limiting the amplitude of the oscillations in said LC-circuit (81, 82, 83).

10. Device for carrying out the method as claimed in claim 5, characterized by
three coils (91, 92, 93) spaced 120°, each of these coils being associated to an oscillator circuit (94, 95, 96) for generating a magnetic field at the frequency required for carrying out the method of claim 5,
a phase shift circuit (97, 98) for generating a phase shift of approximately 120° between the magnetic fields generated by said three oscillator circuits (94, 95, 96), and
a circuit associated to each one of the three coils for providing an output signal that is directly responsive to the dissipated power at the corresponding coil.

11. Device as claimed in claim 10, characterized by an air gap delimited by profiled poles in a ferromagnetic material, for passing said elongated substrate with its coating.

## Patentansprüche

1. Verfahren zur kontaktlosen Messung der tatsächlichen Dicke einer mit einer Nenndicke auf ein längliches, ferromagnetisches Substrat aufgebrachten, elektrisch leitenden Beschichtung, bei dem ein magnetisches Wechselfeld mit hoher Frequenz erzeugt wird, und das mit der Beschichtung versehene Substrat durch dieses Magnetfeld hindurchbewegt wird, dadurch gekennzeichnet,
daß die Frequenz des magnetischen Wechselfeldes in Abhängigkeit von der elektrischen Leitfähigkeit der Beschichtung und des Substrats derart gewählt wird, daß die Eindringtiefe der durch das magnetische Wechselfeld erzeugten Wirbelströme nahe bei der Nenndicke der Beschichtung liegt, und
daß die Verlustleistung gemessen wird, wenn das mit der Beschichtung versehene Substrat durch das Magnetfeld hindurchbewegt wird, und die tatsächliche Dike der Beschichtung abgeleitetet wird, indem eine direkte und monotone Beziehung benutzt wird, die zwischen der Verlustleistung und der tatsächlichen Dicke der Beschichtung besteht.

2. Verfahren gemäß Anspruch 1, dadurch gekennzeichnet, daß das Magnetfeld ein uniformes Magnetfeld ist, das im wesentlichen orthogonal zu der Bewegungsrichtung des mit der Beschichtung versehenen Substrats ist.

3. Verfahren gemäß Anspruch 1 oder 2, gekennzeichnet
durch die Versorgung von mindestens einer Spule mit einem elektrischen Wechselstrom der gewählten Frequenz, so daß ein magnetischer Fluß erzeugt wird, der in einem magnetischen Kreis kanalisiert und konzentriert ist, wobei dieser magnetische Kreis aus einem ferromagnetischen Material derart gebildet ist, daß Verluste außerhalb dieses magnetischen Kreises vermieden werden, und
durch die Bewegung des mit der Beschichtung versehenen Substrats durch das Magnetfeld hindurch, in einem Luftspalt des magnetischen Kreises.

4. Verfahren gemäß irgendeinem der Ansprüche 1 bis 3,
dadurch gekennzeichnet,
daß zwei uniforme Magnetfelder erzeugt werden, die im wesentlichen orthogonal zur der Bewegungsrichtung des mit der Beschichtung versehenen Substrats sind, wobei die zwei Magnetfelder einen von Null verschiedenen Winkel zwischen sich bilden, und
daß das mit der Beschichtung versehene Substrat durch diese zwei Magnetfelder hindurchbewegt wird.

5. Verfahren gemäß Anspruch 1, dadurch gekennzeichnet, daß das Magnetfeld ein magnetisches Drehfeld ist, das im wesentlichen orthogonal zu der Bewegungsrichtung des mit der Beschichtung versehenen Substrats ist.

6. Vorrichtung zur Verwirklichung des Verfahrens gemäß Anspruch 1, gekennzeichnet durch
mindestens einen magnetischen Kreis (64) aus einem ferromagnetischen Material, der einen Luftspalt mit Profilpolen zum Hindurchbewegen des mit der Beschichtung versehenen Substrats (65) festlegt,
eine Oszillatorschaltung, die mindestens eine Spule (61, 62) aufweist, um einen magnetischen Fluß mit der für das Verfahren des Anspruchs 1 erforderlichen Frequenz in dem magnetischen Kreis (64) zu induzieren, und eine Meßschaltung, um ein Ausgangssignal zu liefern, das unmittelbar repräsentativ für die in Wärme umgesetzte Leistung ist.

7. Vorrichtung gemäß Anspruch 6, dadurch gekennzeichnet, daß die Oszillatorschaltung zwei Spulen (61, 62) aufweist, die beiderseits des Luftspalts angeordnet sind und in Serie geschaltet sind.

8. Vorrichtung gemäß Anspruch 6 oder 7, dadurch gekennzeichnet, daß die Oszillatorschaltung einen LC-Kreis (81, 82, 83) darstellt, der in einer geschlossenen Schleife mit einem Regelverstärker (86) verbunden ist.

9. Vorrichtung gemäß Anspruch 8, gekennzeichnet durch eine Regelschleife, die die Amplitude der Schwingungen in dem LC-Kreis (81, 82, 83) begrenzt.

10. Vorrichtung zur Verwirklichung des Verfahrens gemäß Anspruch 5, gekennzeichnet durch
drei Spulen (91, 92, 93), die unter 120° zueinander angeordnet sind, wobei jede dieser Spulen einer Oszillatorschaltung (94, 95, 96) zugeordnet ist, um ein Magnetfeld mit der für das Verfahren des Anspruchs 5 erforderlichen Frequenz zu erzeugen,
eine Phasenschaltung (97, 98), über die eine Phasenverschiebung von im wesentlichen 120° zwischen den von den drei Oszillatorschaltungen (94, 95, 96) erzeugten Magnetfeldern hervorgerufen werden kann, und
eine Schaltung, die jeder der drei Spulen zugeordnet ist, um ein Ausgangssignal zu liefern, das unmittelbar repräsentativ für die Verlustleistung im Bereich dieser Spule ist.

11. Vorrichtung gemäß Anspruch 10, gekennzeichnet durch einen durch Profilpole begrenzten Luftspalt in einem ferromagnetischen Material, zum Hindurchbewegen des mit der Beschichtung versehenen Substrats.
